(19) Europäisches Patentamt
European Patent Office
Office européen des brevets

(11) **EP 1 105 746 B1**

(12) **FASCICULE DE BREVET EUROPEEN**

(45) Date de publication et mention de la délivrance du brevet:
**13.11.2002 Bulletin 2002/46**

(21) Numéro de dépôt: **99936684.2**

(22) Date de dépôt: **04.08.1999**

(51) Int Cl.7: **G01S 11/02**, H04Q 7/38

(86) Numéro de dépôt international:
**PCT/FR99/01928**

(87) Numéro de publication internationale:
**WO 00/008482 (17.02.2000 Gazette 2000/07)**

(54) **METHODE D'ESTIMATION RADIO DE LA VITESSE D'UN MOBILE**

FUNKVERFAHREN ZUR BESTIMMUNG DER GESCHWINDIGKEIT EINER MOBILSTATION

RADIO ESTIMATION METHOD OF A MOBILE STATION VELOCITY

(84) Etats contractants désignés:
**DE FI GB SE**

(30) Priorité: **04.08.1998 FR 9810224**

(43) Date de publication de la demande:
**13.06.2001 Bulletin 2001/24**

(73) Titulaire: **NORTEL MATRA CELLULAR**
**78042 Guyancourt (FR)**

(72) Inventeurs:
• **BONHOMME, Corinne**
**F-77700 Chessy (FR)**
• **DORNSTETTER, Jean-Louis**
**F-78370 Plaisir (FR)**
• **BEN RACHED, Nidham**
**F-75017 Paris (FR)**

(74) Mandataire: **Renaud-Goud, Thierry**
**Renaud-Goud Conseil,**
**5, rue de Montigny**
**13100 Aix-en-Provence (FR)**

(56) Documents cités:
• **AUSTIN M D ET AL: "VELOCITY ADAPTIVE HANDOFF ALGORITHMS FOR MICROCELLULAR SYSTEMS" IEEE TRANSACTIONS ON VEHICULAR TECHNOLOGY, vol. 43, no. 3, PART 01, août 1994 (1994-08), pages 549-561, XP000466790**

**Description**

La présente invention concerne une méthode d'estimation de la vitesse d'une station mobile par rapport à une station distante au moyen d'un signal de transmission radio électrique empruntant un canal de transmission qui relie ces deux stations.

Le domaine de l'invention est donc celui des radiocommunications mobiles qui permettent d'établir une liaison radioélectrique entre un terminal portable ou portatif et un équipement central qui, la plupart du temps, déssert plusieurs terminaux. Cet équipement central fait souvent partie d'une infrastructure telle qu'un réseau et, généralement fixe, il sera référencé en tant que station distante. Par contre, le terminal peut être amené à se déplacer alors qu'il est en cours de fonctionnement, si bien qu'on le dénommera station mobile.

Le déplacement relatif de la station mobile par rapport à la station distante est caractérisé par une vitesse qui constitue une information importante à plus d'un titre. En premier lieu, il s'agit d'un paramètre de fonctionnement de la station mobile et du véhicule dans lequel elle est disposée. Par ailleurs, on mentionnera le domaine plus particulier des réseaux de radiotéléphonie cellulaire.

Dans ces réseaux, la couverture d'une station mobile est assurée par une pluralité de stations distantes chacune affectée à un secteur géographique identifié dit cellule. Lorsque la station mobile se trouve à la limite de plusieurs cellules, se pose la question de savoir à quelle station distante la connecter. On comprend bien que la vitesse de la station mobile est un élément fondamental dans le choix de la station distante appropriée.

En effet, si cette vitesse est sensiblement nulle, il est peu probable que la station mobile quitte la cellule dans laquelle elle est inscrite alors que si cette vitesse est élevée, il est beaucoup plus probable que cette station soit en train de rejoindre une nouvelle cellule.

A titre complémentaire, on citera les réseaux microcellulaires dans lesquels chaque emplacement est couvert simultanément par une microcellule et par une cellule parapluie qui se superpose à une pluralité de microcellules adjacentes. On pressent ici que des stations mobiles animées d'une vitesse nulle ou faible seront préférentiellement raccordées à des microcellules tandis que les stations mobiles se déplaçant rapidement devraient -être connectées à la cellule parapluie pour éviter de trop nombreux et trop fréquents changements de microcellules.

Il apparaît ainsi que la vitesse d'une station mobile est un paramètre d'une grande utilité lorsqu'il s'agit de sélectionner la station fixe à laquelle la raccorder, procédure connue sous le vocable anglo-saxon de "handover". Des algorithmes pour l'estimation de la vitesse d'une station mobile dans un réseau microcellulaire sont divulgués dans le document : "Velocity Adaptative Handoff Algorithms for Microcellular Networks" (Austin et Al). IEEE Transactions on Vehicular Technology, vol. 43, no. 3, Part 01, August 1994.

La présente invention a ainsi pour objet une méthode d'estimation de la vitesse d'une station mobile reliée à une station distante par un canal de transmission qui véhicule un signal de transmission radioélectrique.

Selon l'invention, cette méthode comprend la succession des étapes suivantes :

- réception et filtrage du signal de transmission empruntant le canal de transmission pour obtenir un signal de mesure reflétant les variations temporelles de ce canal,
- détermination d'une fonction de corrélation de ce signal de mesure paramétrée par la vitesse de la station mobile,
- recherche de la valeur de la dérivée seconde de cette fonction de corrélation à l'origine,
- estimation de la dérivée première du signal de mesure et calcul de la variance de cette estimation,
- identification des résultats obtenus lors des deux étapes précédentes.

Avantageusement, le filtrage du signal de transmission consiste à supprimer le bruit additif du canal de transmission.

Selon une caractéristique additionnelle de l'invention, le signal de mesure est la réponse impulsionnelle dynamique du canal de transmission.

Dans ce cas, la méthode comprend de préférence une étape pour produire la réponse statique r du canal de transmission ; le canal de transmission présentant une dispersion temporelle déterminée, le signal de transmission s étant une séquence d'apprentissage, une matrice de mesure M étant établie à partir de la séquence d'apprentissage compte tenu de la dispersion temporelle, cette étape pour produire la réponse statique r du canal se fait selon l'expression suivante :

$$s = M.r + n$$

où n représente le bruit additif du canal.

De plus, on prévoit une étape supplémentaire pour rechercher le vecteur propre $r_0$ associé à la plus grande valeur propre de la covariance de cette réponse statique r ; la dérivée première du signal de mesure est égale à un

coefficient $\alpha_0$ déterminé de sorte que le signal de transmission s soit maintenant défini par l'expression suivante :

$$s = M.r + \alpha_0 TM.r_0 + n$$

où T est une matrice représentant le temps.

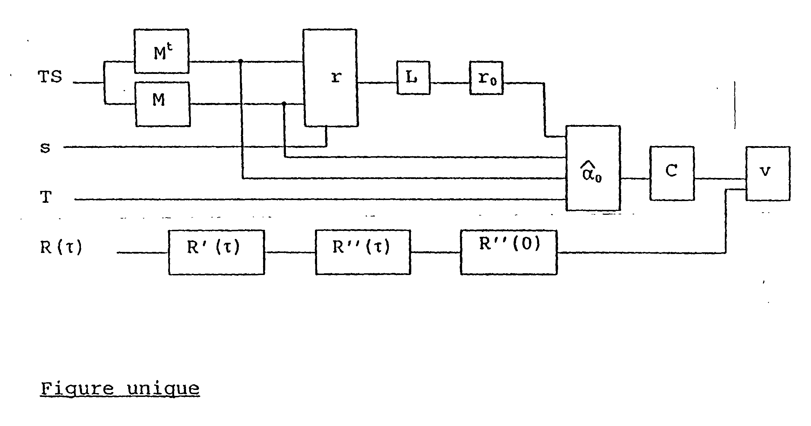

L'invention apparaîtra maintenant avec plus de détails dans le cadre de la description qui suit d'un exemple de réalisation donné à titre illustratif en référence à l'unique figure annexée qui représente sous forme symbolique les principales étapes de cet exemple de réalisation.

En notant X(t) une fonction complexe du temps, on adoptera les notations suivantes :

- X'(t) : dérivée première de la fonction X(t),
- X''(t) : dérivée seconde de la fonction X(t),
- |X(t)| : module de la fonction X(t),
- X*(t) : fonction conjuguée complexe de la fonction X(t),
- E[X(t) X*(t)] : variance de la fonction X(t).

On rappelle que la fonction de corrélation temporelle $R(\tau)$ de X(t) s'écrit comme suit :

$$R(\tau) = E[X(t)X^*(t - \tau)]$$

En dérivant cette expression par rapport à $\tau$, on obtient :

$$R'(\tau) = - E[X(t)X^{*'}(t - \tau)]$$

En effectuant le changement de variable t' = t - $\tau$, l'expression précédente devient :

$$R'(\tau) = E[X(t' + \tau) X^{*'}(t')]$$

En procédant à une nouvelle dérivation de cette expression par rapport à $\tau$, il vient que :

$$R''(\tau) = - E[X'(t' + \tau) X^{*'}(t')]$$

Pour la valeur $\tau = 0$, l'expression ci-dessus prend donc la valeur suivante :

$$R''(0) = - E[X'(t) X^{*'}(t)],$$

ou encore

$$R''(0) = - E[|X'(t)|^2] \qquad (1)$$

Ainsi, la dérivée seconde R''(0) de la fonction de corrélation à l'origine a même valeur que la variance de la dérivée première de la fonction X(t).

L'invention propose de réaliser une estimation de la vitesse de la station mobile à partir de ce résultat.

On fait ici l'hypothèse que la station mobile reçoit un signal de transmission en provenance de la station distante par un canal de transmission. Il faut cependant remarquer que le problème est entièrement symétrique et que la solution serait la même si c'était la station distante qui recevait un signal en provenance de la station mobile.

La première opération consiste à sélectionner un modèle de corrélation du signal reçu. Un tel modèle qui a pour paramètre la vitesse de la station mobile par rapport à la station distante peut-être déterminé de manière empirique. Il peut également correspondre à un modèle théorique et, dans le cadre du présent mode de réalisation, on retiendra le modèle dit "modèle de Jakes" qui est bien adapté à la situation. Selon ce modèle, pour un signal d'énergie

normalisée, en notant $J_0$ la fonction de Bessel d'ordre 0, la fonction de corrélation s'écrit :

$$R(\tau) = J_0(\frac{2\pi v \tau}{\lambda})$$

où

- v est la vitesse,
- $\lambda$ la longueur d'onde du signal.

La dérivée première de cette fonction de corrélation s'écrit alors :

$$R'(\tau) = \frac{2\pi v}{\lambda} J'_0(\frac{2\pi v \tau}{\lambda})$$

La dérivée seconde s'écrit, quant à elle :

$$R''(\tau) = \frac{4\pi^2 v^2}{\lambda^2} J''_0(\frac{2\pi v \tau}{\lambda})$$

Or la dérivée seconde de la fonction de Bessel d'ordre 0 à l'origine vaut - 1/2 :

$$J''_0(0) = - 1/2$$

Il vient que :

$$R''(0) = - \frac{2\pi^2 v^2}{\lambda^2} \tag{2}$$

On obtient ici une relation (2) qui explicite la dépendance entre la dérivée seconde à l'origine de la fonction de corrélation et la vitesse. Dans le cas du modèle de Jakes cette relation est particulièrement simple mais, quel que soit le modèle retenu, il existe une relation biunivoque entre ces deux grandeurs.

Il convient ensuite de définir un signal de mesure X(t) qui reflète les variations temporelles du canal de transmission.

Naturellement ce signal de mesure peut-être le signal de transmission lui-même.

Dans ce cas, il est préférable de procéder à une opération de filtrage de manière à éliminer le bruit additif du canal de transmission.

On remarque que si' le signal de transmission est obtenu par l'émission d'une impulsion, alors ce signal, après le filtrage mentionné ci-dessus, correspond à la réponse impulsionnelle du canal de transmission.

Ainsi, selon une caractéristique avantageuse de l'invention, le signal de mesure est la réponse impulsionnelle du canal. En effet, cette réponse est généralement employée à d'autres fins, notamment pour l'égalisation du signal de transmission, si bien qu'elle est déjà disponible.

A titre d'exemple, on indique maintenant un moyen d'estimer cette réponse impulsionnelle dynamique qui dépend du temps par opposition à une réponse impulsionnelle statique estimée abstraction faite des variations temporelles du canal de transmission.

Il sera maintenant fait référence au système cellulaire numérique de radiocommunications GSM car ce système a le mérite d'être bien connu de l'homme du métier. Cette présentation est adoptée dans un souci de clarté mais il ne faut y voir en aucun cas une limitation de l'invention à ce seul système.

Ce système fait appel à des séquences d'apprentissage TS formées de 26 symboles notés $a_0$ à $a_{25}$ prenant la valeur +1 ou -1, Ces symboles en provenance de l'émetteur sont connus du récepteur et l'on englobera donc sous le terme "séquence d'apprentissage" toute séquence de bits qui sont connus à priori de ce récepteur par quelque moyen que ce soit.

En référence à la figure, le signal de transmission est donc la séquence s de symboles reçus par le récepteur. Cette séquence s, qui correspond à la séquence d'apprentissage TS émise par l'émetteur, est formée elle aussi de 26 symboles.

En matière de rappel, les techniques d'estimation font appel à une matrice de mesure M construite à partir de la séquence d'apprentissage TS de longueur n. Cette matrice comprend (n-d) lignes et (d+1) colonnes, d représentant la dispersion temporelle du canal. L'élément figurant à la ième ligne et à la jième colonne est le (d+i-j)ième symbole de la séquence d'apprentissage :

$$M = \begin{pmatrix} a_4 & a_3 & a_2 & a_1 & a_0 \\ a_5 & a_4 & a_3 & a_2 & a_1 \\ a_6 & a_5 & a_4 & a_3 & a_2 \\ a_7 & \cdots & \cdots & \cdots & \cdots \\ & \cdots & \cdots & \cdots & \cdots \\ & \cdots & \cdots & \cdots & \cdots \\ a_{25} & \cdots & \cdots & \cdots & a_{21} \end{pmatrix}$$

La séquence d'apprentissage est choisie telle que la matrice $M^t M$ soit inversible où l'opérateur $.^t$ représente la transposition.

Classiquement, la dispersion temporelle d du canal valant 4 dans le cas du GSM, l'estimation de la réponse impulsionnelle statique prend la forme d'un vecteur à 5 composantes. Si l'on retient la technique des moindres carrés, ce vecteur r vaut $(M^t M)^{-1} M^t .s$.

On construit maintenant une matrice de lissage L par lissage des différentes réponses r obtenues pour les séquences d'apprentissage successivement émises, ceci afin d'obtenir une estimation de la covariance associée à cette réponse statique. On entend ici lissage dans un sens très général, c'est-à-dire toute opération permettant de lisser ou de moyenner la réponse statique.

Un premier exemple de lissage consiste à effectuer la moyenne de la matrice $rr^h$ sur une période supposée comprendre m séquences d'apprentissage, l'opérateur $.^h$ représentant la transformation hermitienne :

$$L(rr^h) = \frac{1}{m} \sum_{1}^{m} rr^h$$

Un second exemple de lissage consiste à actualiser, à la ième séquence d'apprentissage reçue, la matrice de lissage obtenue à la (i-1)ième séquence d'apprentissage au moyen d'un coefficient multiplicatif $\lambda$, ce facteur étant généralement connu sous le nom de facteur d'oubli de lissage et étant compris entre 0 et 1 :

$$L_i(rr^h) = \lambda r_i r_i^h + (1-\lambda) L_{i-1}(rr^h)$$

L'initialisation peut se faire par tous moyens, notamment au moyen de la première estimation r obtenue ou bien par une moyenne obtenue comme ci-dessus pour un faible nombre de séquences d'apprentissage.

On recherche alors le vecteur propre $r_0$ associé à la plus grande valeur propre de cette matrice $L(rr^h)$.

En notant $u_0 = M.r_0$, on postule que le signal reçu se présente sous la forme suivante :

$$s = M.r + \alpha_0 T.u_0 + n \qquad (3)$$

où n figure le bruit additif dans le canal de transmission et T est une matrice qui figure le temps auquel son reçus les différents symboles, ce temps étant exprimé en durées symbole :

$$T = \begin{pmatrix} -10,5 & 0 & 0 & \dots\dots\dots & 0 \\ 0 & -9,5 & 0 & \dots\dots\dots & 0 \\ 0 & 0 & -8,5 & 0 & \dots\dots & 0 \\ \multicolumn{5}{c}{\dots\dots\dots\dots\dots\dots\dots\dots\dots\dots\dots} \\ \multicolumn{5}{c}{\dots\dots\dots\dots\dots\dots\dots\dots\dots\dots\dots} \\ \dots\dots\dots\dots\dots & 0 & 9,5 & & 0 \\ \dots\dots\dots\dots\dots & 0 & 0 & & 10,5 \end{pmatrix}$$

En fait, T est une matrice diagonale de dimension 22 dont l'élément qui figure à la ième ligne et à la ième colonne représente le temps qui correspond au (d+i)ième symbole de la séquence d'apprentissage, soit $a_{(d+i-1)}$, l'origine du temps étant arbitrairement fixée entre les quinzième et seizième symboles.

Il apparaît que la dérivée temporelle de la réponse impulsionnelle dynamique a pour valeur le coefficient $\alpha_0$.

En notant I la matrice identité, on introduit un opérateur de transformation A :

$$A = I - M(M^tM)^{-1}M^t$$

L'équation (3) se traduit alors par l'expression suivante :

$$A.s = \alpha_0 AT.u_0 + A.n$$

En notant $u'_0 = T.u_0$, la résolution de cette équation au sens des moindres carrés donne la valeur estimée $\hat{\alpha}_0$ du coefficient $\alpha_0$ :

$$\hat{\alpha}_0 = \frac{u'^{h}_0 A.s}{u'^{h}_0 A.u'_0}$$

L'opération suivante consiste à calculer la variance C de la dérivée de la réponse impulsionnelle dynamique :

$$C = E\left[\left|\hat{\alpha}_0\right|^2\right]$$

En reprenant les équations (1) et (2) :

$$R''(0) = -E[|X'(t)|^2]$$

$$R''(0) = -\frac{2\pi^2 v^2}{\lambda^2}$$

En reprenant d'autre part l'équation (3) :

$$X(t) = r + t\hat{\alpha}_0 r_0$$

Lorsque $r_0$ est normalisé :

$$E[|X'(t)|^2] = E\left[\left|\hat{\alpha}_0\right|^2\right]$$

Il vient que :

$$C = \frac{2\pi^2 v^2}{\lambda^2}$$

On obtient ainsi la vitesse de la station mobile :

$$v = \frac{\lambda}{\pi}\sqrt{\frac{C}{2}}$$

Il apparaît ainsi que, connaissant un modèle de la fonction de corrélation d'un signal reçu par un canal de transmission, l'on peut procéder à une estimation de la vitesse relative des stations émettant et recevant ce signal.

L'invention ne se limite pas au mode de réalisation décrit. En particulier, tout moyen peut-être remplacé par un moyen équivalent.

## Revendications

1. Méthode d'estimation de la vitesse (v) d'une station mobile reliée par un canal de transmission radio à une station distante, cette méthode comprenant la succession des étapes suivantes :

   - réception et filtrage d'un signal de transmission (s) empruntant ledit canal de transmission pour obtenir un signal de mesure reflétant les variations temporelles dudit canal de transmission,
   - détermination d'une fonction de corrélation ($R(\tau)$) dudit signal de mesure paramétrée par la vitesse (v) de la station mobile,
   - recherche de la valeur (R''(0)) de la dérivée seconde de cette fonction de corrélation à l'origine,
   - estimation de la dérivée première ($\alpha_0$) dudit signal de mesure et calcul de la variance (C) de cette estimation,
   - identification des résultats obtenus lors des deux étapes précédentes (R''(0) = C).

2. Méthode selon la revendication 1, **caractérisée en ce que** le filtrage dudit signal de transmission (s) consiste à supprimer le bruit additif dudit canal de transmission.

3. Méthode selon la revendication 1, **caractérisée en ce que** ledit signal de mesure est la réponse impulsionnelle dynamique dudit canal de transmission.

4. Méthode selon la revendication 3 **caractérisée en ce que**, ledit canal de transmission présentant une dispersion temporelle déterminée, ledit signal de transmission (s) étant une séquence d'apprentissage (TS), une matrice de mesure (M) étant établie à partir de ladite séquence d'apprentissage (TS) compte tenu de ladite dispersion temporelle, elle comprend une étape pour produire la réponse statique (r) dudit canal de transmission selon l'expression :

$$s = M.r + n$$

où n représente le bruit additif du canal.

5. Méthode selon la revendication 4 **caractérisée en ce que**, comprenant une étape pour rechercher le vecteur propre ($r_0$) associé à la plus grande valeur propre de la covariance (L) de ladite réponse statique (r), la dérivée première dudit signal de mesure est égale à un coefficient $\alpha_0$ déterminé de sorte que ledit signal de transmission (s), soit maintenant défini par l'expression :

$$s = M.r + \alpha_0 TM.r_0 + n$$

où T est une matrice représentant le temps.

**Patentansprüche**

1. Methode zur Schätzung der Geschwindigkeit (v) einer mobilen Station, die durch einen Funkübertragungskanal mit einer entfernten Station verbunden ist, wobei diese Methode die Aufeinanderfolge der nachstehenden Schritte umfasst:

   - Empfang und Filterung eines Übertragungssignals (s), wobei der genannte Übertragungskanal dazu verwendet wird, ein Messsignal zu erhalten, das die kurzzeitigen Schwankungen des genannten Übertragungskanals widerspiegelt,
   - Bestimmung einer Korrelationsfunktion (R($\tau$) des genannten Messsignals, parametriert durch die Geschwindigkeit (v) der Mobilstation,
   - Ermittlung des Wertes (R''(0)) der zweiten Ableitung dieser Korreklationsfunktion am Ursprung,
   - Schätzung der ersten Ableitung ($\alpha_0$) des genannten Messsignals und Berechnung der Varianz (c) dieses Schätzwertes,
   - Identifizierung der bei den zwei vorigen Schritten erhaltenen Ergebnisse (R'' (0) = C).

2. Methode nach Anspruch 1, **dadurch gekennzeichnet** das die Filterung des genannten Übertragungssignals (s) darin besteht, dass das Rauschen des Übertragungskanals unterdrückt wird.

3. Methode nach Anspruch 1, **dadurch gekennzeichnet, dass** das genannte Messsignal die dynamische Impulsreaktion des genannten Übertragungskanals ist.

4. Methode nach Anspruch 3 - wobei der genannte Übertragungskanal eine bestimmte kurzzeitige Streuung aufweist und das genannte Übertragungssignal (s) eine Lernsequenz (TS) ist, und wobei eine Messmatrix (M) anhand der genannten Lernsequenz (TS)unter Berücksichtigung der genannten kurzzeitigen Streuung erstellt wird, - **dadurch gekennzeichnet, dass** sie einen Schritt umfasst, um die statische Reaktion (r) des genannten Übertragungskanals nach dem Term:

$$s = M.r + n$$

zu bestimmen, wobei n das Kanalrauschen darstellt.

5. Methode nach Anspruch 4, **dadurch gekennzeichnet, dass** sie einen Schritt zur Ermittlung des Eigenvektors ($r_0$) in Verbindung mit dem größten Eigenwert der Kovarianz (L) der genannten statischen Reaktion (r) umfasst, wobei die erste Ableitung des genannten Messsignals gleich einem Koeffizienten $\alpha_0$ ist, der so bestimmt wird, dass das genannte Übertragungssignal (s) nun durch den Ausdruck:

$$s = M.r + \alpha_0 TM.r_0 + n$$

definiert wird, wobei T eine die Zeit darstellende Matrix ist.

**Claims**

1. A method of estimating the speed (v) of a mobile station connected by a radio transmission channel to a remote station, said method including the following successive steps:

   • receiving and filtering a transmission signal (s) to obtain a measuring signal reflecting time variations of said transmission channel,
   • determining a correlation function (R($\tau$)) of said measuring signal parametered by the mobile station speed (v),

- seeking the value (R"(0)) of the second derivation of said correlation function at the origin,
- estimating the first derivative ($\alpha_0$) of the measuring signal and calculating the variance (C) of the estimate, and
- identifying the results obtained during the preceding two steps (R"(0) = C).

2.  A method according to claim 1, **characterized in that** filtering said transmission signal (s) consists of eliminating the additive noise of said transmission channel.

3.  A method according to claim 1, **characterized in that** said measuring signal is the dynamic impulse response of said transmission channel.

4.  A method according to claim 3, characterizes in that, said transmission channel has a particular time dispersion, said transmission signal (s) is a training sequence (TS), a measuring matrix (M) is established from said training sequence (TS) allowing for said time dispersion, and the method includes a stop of producing the static response (r) of said transmission channel in accordance with the equation:

$$s = M.r + n$$

in which $\underline{n}$ represents the additive noise of the channel.

5.  A method according to claim 4, **characterized in that**, including a step of seeking the eigen vector ($r_0$) associated with the greatest eigen value of the covariance (L) of said static response (r), the first derivative of said measuring signal is equal to a coefficient $\alpha_0$ determined so that said transmission signal (s) is now defined by the equation:

$$s = M.r + \alpha_0 TM.r_0 + n$$

in which T is a matrix representing time.

Figure unique